(19) Europäisches Patentamt

European Patent Office

Office européen des brevets

(11) **EP 1 200 511 B1**

(12) **FASCICULE DE BREVET EUROPEEN**

(45) Date de publication et mention
de la délivrance du brevet:
**13.10.2004 Bulletin 2004/42**

(21) Numéro de dépôt: **00949317.2**

(22) Date de dépôt: **10.07.2000**

(51) Int Cl.⁷: **C08J 5/22**, B05D 1/28

(86) Numéro de dépôt international:
**PCT/EP2000/006616**

(87) Numéro de publication internationale:
**WO 2001/004189 (18.01.2001 Gazette 2001/03)**

(54) **PROCEDE POUR GREFFER UN MONOMERE SUR UN FILM EN MATIERE POLYMERE**

VERFAHREN ZUM PROPFEN EINES MONOMERS AUF EINE KUNSTSTOFFFOLIE

METHOD FOR GRAFTING A MONOMER ON A POLYMER FILM

(84) Etats contractants désignés:
**AT BE CH CY DE DK ES FI FR GB GR IE IT LI LU
MC NL PT SE**

(30) Priorité: **08.07.1999 IT MI991500**

(43) Date de publication de la demande:
**02.05.2002 Bulletin 2002/18**

(73) Titulaire: **SOLVAY (Société Anonyme)
1050 Bruxelles (BE)**

(72) Inventeurs:
• **BOTTE, Luc
I-57013 Rosignano-Solvay (IT)**

• **BRUNEA, John, A.
F-39500 Tavaux (FR)**

(74) Mandataire: **Jacques, Philippe et al
Solvay S.A.
Département de la Propriété Industrielle,
Rue de Ransbeek, 310
1120 Bruxelles (BE)**

(56) Documents cités:
**EP-A- 0 578 886**          **US-A- 4 288 467**

• **PATENT ABSTRACTS OF JAPAN vol. 006, no.
154 (C-119), 14 août 1982 (1982-08-14) & JP 57
073027 A (YUASA BATTERY CO LTD;OTHERS:
02), 7 mai 1982 (1982-05-07)**

## Description

L'invention concerne un procédé pour greffer un monomère sur un film en matière polymère.

Le greffage de monomères sur des films en matière polymère est une technique bien connue pour conférer à ces films des propriétés particulières. Dans cette technique connue, on génère des radicaux libres dans le film et on met celui-ci en contact avec une solution du monomère de manière que celui-ci réagisse avec les radicaux libres. Cette technique trouve une application dans la fabrication des membranes échangeuses d'ions par greffage radiochimique [J. of Membrane Science, 67 (1992) pages 263-271].

Cette technique de greffage s'est toutefois révélée difficile à appliquer industriellement, du fait qu'elle nécessite généralement de longues durées de traitement. D'autre part, dans le cas de films de grandes dimensions, des précautions doivent être prises pour éviter des déformations locales ou des tensions internes dans le film greffé.

Dans US 4 288 467 est décrit une méthode de production de membrane en copolymère permettant de réduire les inégalités de polymérisation. Toutefois les films obtenus par ce procédé présentent encore trop de déformations.

L'invention tend à remédier à ces inconvénients, en fournissant un procédé nouveau de greffage de monomères sur des films polymères, qui est rapide et économique et qui réduit encore, voire supprime, la formation de tensions internes ou de déformations dans le cas de films de grandes dimensions.

En conséquence, l'invention concerne un procédé pour greffer un monomère sur un film en matière polymère, dans lequel on met le film en contact avec une solution liquide du monomère ; selon l'invention, pour mettre le film en contact avec la solution du monomère, on loge la solution dans des alvéoles d'au moins une feuille alvéolaire que l'on applique contre au moins une face du film.

Dans le procédé selon l'invention, la matière polymère du film et le monomère ne sont pas critiques et dépendent essentiellement des applications auxquelles on destine le film greffé. La solution du monomère peut être indifféremment une solution organique ou une solution inorganique. On préfère les solutions organiques. Le solvant doit être choisi de telle sorte qu'il dissolve le monomère et soit sensiblement inerte vis-à-vis de la matière polymère du film. Le choix du solvant de la solution peut dès lors être aisément déterminé en fonction du monomère et de la matière polymère du film.

La feuille alvéolaire a pour fonction d'emprisonner la solution du monomère dans ses alvéoles, pour la maintenir au contact du film. La feuille alvéolaire doit par conséquent être inerte vis-à-vis de la solution de monomère et de la matière polymère du film, dans les conditions de pression et de température qui règnent normalement pendant l'exécution du procédé. L'épaisseur de la feuille alvéolaire et les dimensions et la forme des alvéoles (notamment la profondeur des alvéoles) doivent être calibrées de manière à emprisonner un volume adéquat de la solution de monomère au contact du film. Ces caractéristiques des alvéoles vont dépendre de divers paramètres, en particulier de la solution de monomère, de sa viscosité et de sa tension superficielle. Elles doivent être déterminées dans chaque cas particulier. A titre d'exemple, pour ce qui concerne la profondeur des alvéoles, on recommande des valeurs comprises entre 0,05 et 5 mm, les valeurs de 0,08 à 2 mm convenant bien, celles situées entre 0,1 et 1 mm étant préférées. La forme des alvéoles n'est généralement pas critique et peut par exemple être carrée, rectangulaire, ou hexagonale.

La feuille alvéolaire peut être une feuille gaufrée. On préfère utiliser un treillis, par exemple obtenu par tissage. Dans cette forme de réalisation préférée de l'invention, les mailles du treillis constituent les alvéoles précitées de la feuille alvéolaire.

Dans une forme de réalisation particulière de l'invention, pour mettre le film en contact avec la feuille alvéolaire, on les enroule sur une bobine, de telle sorte que la feuille alvéolaire soit interposée entre les spires successives. du film sur la bobine. Dans cette forme de réalisation particulière de l'invention, on fait circuler le film ou la feuille alvéolaire dans un bain de la solution de monomère, avant de les enrouler ensemble sur la bobine. En variante, le film et la feuille alvéolaire circulent tous les deux dans le bain de la solution avant d'être enroulés ensemble sur la bobine. Dans cette forme de réalisation de l'invention, la feuille alvéolaire remplit deux fonctions. D'une part, elle sert à entraîner la solution de monomère dans ses alvéoles jusqu'au contact du film ; d'autre part, elle sert à retenir un volume suffisant de ladite solution au contact du film pour permettre la réaction de greffage du monomère sur le film.

Dans le procédé selon l'invention, la réaction de greffage a pour effet de consommer le monomère contenu dans les alvéoles de la feuille alvéolaire. La solution de monomère doit par conséquent être régénérée périodiquement, si on désire réaliser un greffage profond du monomère dans le film polymère. A cet effet, dans une variante avantageuse de la forme de réalisation qui vient d'être décrite, le film et la feuille alvéolaire sont alternativement enroulés sur là bobine et déroulés de celle-ci et, entre deux enroulements successifs sur la bobine, on fait circuler le film ou la feuille alvéolaire dans le bain de la solution de monomère. Dans une autre variante de ladite forme de réalisation de l'invention, on met en oeuvre deux bobines et deux feuilles alvéolaires et on enroule le film alternativement sur une des bobines avec une des feuilles alvéolaires et sur l'autre bobine avec l'autre feuille alvéolaire. Dans cette variante de l'invention, le film ou, de préférence, chaque feuille alvéolaire circule dans le bain de la solution de monomère, avant chaque enroulement sur une bobine. Cette variante de l'invention, qui est préférée, permet de réduire sensiblement, voire de supprimer, la formation de tensions internes permanentes dans le film greffé et elle évite que celui-ci présente des déformations, des plis ou des déchirures. Dans les deux variantes de l'invention qui viennent d'être décrites, le nombre d'enroulements et de déroulements successifs du film vont dépendre du taux de greffage recherché, celui-ci (exprimé en %) étant défini par l'expression

$$t = \frac{P - P^\circ}{P^\circ} \times 100,$$

où $P^\circ$ et $P$ désignent la masse du film, respectivement avant et après le greffage. Les vitesses optimum d'enroulement et de déroulement du film sur les bobines sont déterminées en fonction du degré de dilatation que le film subit pendant le greffage. Elles dépendent de divers paramètres, tels que la matière polymère du film, le monomère, la vitesse de greffage et les dimensions du film et doivent être déterminées dans chaque cas particulier par un travail de routine au laboratoire.

Le procédé selon l'invention, particulièrement sa forme de réalisation particulière qui vient d'être décrite, permet de régler à volonté le volume de la solution de monomère au contact du film. Il présente ainsi l'avantage d'optimiser le taux de greffage du film.

Le procédé selon l'invention s'applique spécialement au greffage radiochimique d'un monomère sur un film en matière polymère dans lequel des radicaux libres ont été formés par ionisation. Dans cette application de l'invention, le traitement du film polymère avec les radiations ionisantes est habituellement effectué en milieu oxygéné (par exemple en présence d'air), de manière à convertir les radicaux libres en (hydro)peroxydes qui réagissent ensuite avec le monomère à greffer.

Des informations concernant le greffage radiochimique sont accessibles dans J. of Membrane Science, 67 (1992) pages 263-271. Dans cette application de l'invention, l'ionisation du film peut être exécutée avant ou pendant que la feuille alvéolaire est mise en contact avec le film et l'énergie des radiations ionisantes à mettre en oeuvre va dépendre du taux de greffage recherché, tel que défini plus haut. Cette application de l'invention convient spécialement bien pour la fabrication de membranes échangeuses d'ions.

On entend, par membrane échangeuse d'ions, une feuille mince, non poreuse, imperméable aux liquides et perméable aux ions. Parmi les membranes échangeuses d'ions, on distingue les membranes cationiques et les membranes anioniques. Par définition, les membranes cationiques sont sélectivement perméables aux cations et imperméables aux anions. De manière similaire, les membranes anioniques sont sélectivement perméables aux anions et imperméables aux cations.

Dans cette application de l'invention, la capacité d'échange ionique de la membrane va dépendre de divers paramètres, notamment du monomère greffé et du taux de greffage. A titre d'exemple, celui-ci peut être avantageusement compris entre 10 et 80 %, les valeurs situées entre 20 et 50 % convenant généralement bien.

Dans cette application de l'invention, le choix de la matière polymère du film va dépendre de la destination de la membrane. En fonction de cette destination, la matière polymère du film peut par exemple appartenir au groupe comprenant le polyéthylène, le polypropylène, le polychlorure de vinyle, le polyfluorure de vinylidène, le polytétrafluoroéthylène, les copolymères de l'éthylène et du tétrafluoroéthylène, les copolymères du propylène et du tétrafluoroéthylène, les copolymères du tétrafluoroéthylène et d'éther perfluorovinylique et les copolymères de l'hexafluoropropylène et du tétrafluoroéthylène.

Dans le cas d'une membrane cationique, le monomère peut avantageusement être sélectionné parmi les composés comprenant un radical aryle, susceptibles de recevoir des groupements fonctionnels cationiques, dérivés d'acide sulfonique, d'acide carboxylique ou d'acide phosphonique. Les alcénylbenzènes et les polyalcénylbenzènes constituent des exemples de tels monomères, le styrène étant préféré.

Dans le cas d'une membrane anionique, le monomère peut avantageusement être sélectionné parmi les composés aminés et les précurseurs des composés aminés. On entend désigner, par précurseur d'un composé aminé, un composé qui, après greffage sur le film polymère, porte des sites actifs, susceptibles de réagir avec une amine pour former un groupement basique comparable à une amine.

Comme exemples de composés aminés utilisables dans le procédé selon l'invention, on trouve les composés hétérocycliques azotés (notamment la vinyl 4 pyridine) et les alkylamines (notamment la triméthylamine). Les halogénoalkylstyrènes constituent des exemples de précurseurs de composés aminés, parmi lesquels le chlorométhylstyrène (qui est ensuite aminé par réaction avec de la triméthylamine) convient spécialement bien.

Des informations concernant la fabrication de membranes cationiques et de membranes anioniques par greffage de sites actifs sur un film polymère sont notamment accessibles dans la demande de brevet français FR 2 641 539 et dans la demande internationale WO 97/15612.

Des particularités et détails de l'invention vont apparaître au cours de la description suivante des dessins annexés, qui représentent schématiquement une installation pour la mise en oeuvre d'une forme de réalisation préférée de l'invention.

La figure 1 montre schématiquement, en section transversale verticale, une installation pour la mise en oeuvre d'une forme de réalisation préférée de l'invention;

La figure 2 montre, à grande échelle, un détail de l'installation de la figure 1;

La figure 3 montre une forme de réalisation modifiée de l'installation de la figure 1.

Dans ces figures, des mêmes notations de référence désignent des éléments identiques.

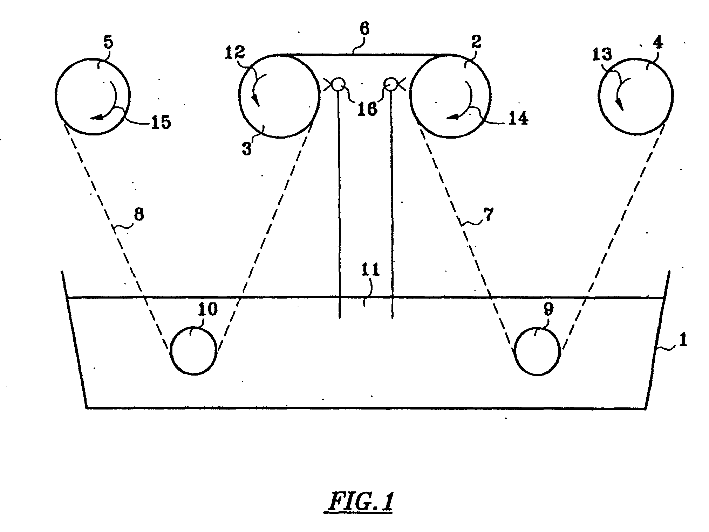

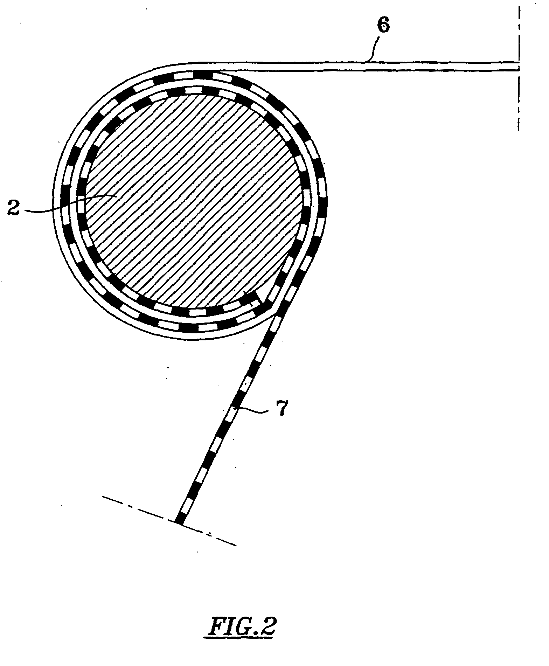

L'installation représentée à la figure 1 comprend, au dessus d'une cuve 1, deux bobines 2 et 3 et deux rouleaux cylindriques 4 et 5. Les bobines 2 et 3 et les rouleaux 4 et 5 sont horizontaux et ont leurs axes respectifs sensiblement parallèles. Un film en matière polymère 6 est enroulé partiellement sur la bobine 2 et partiellement sur la bobine 3. Un treillis en matière inerte 7 est enroulé partiellement sur la bobine 2 et partiellement sur le rouleau 4 et un second treillis 8 en matière inerte, sensiblement identique au treillis 7, est enroulé partiellement sur la bobine 3 et partiellement sur le rouleau 5. Sur la bobine 2, les spires du film 6 alternent avec les spires du treillis 7, comme la figure 2 le montre à plus grande échelle. Sur la bobine 3, les spires du film 6 alternent avec les spires du treillis 8. La position du film 6 et du treillis 8 sur la bobine 3 est sensiblement identique à la représentation de la figure 2. Entre la bobine 2 et le rouleau 4, le treillis 7 passe sur un rouleau intermédiaire 9 disposé dans la cuve 1. Entre la bobine 3 et le rouleau 5, le treillis 8 passe sur un autre rouleau intermédiaire 10, qui est également disposé dans la cuve 1. La cuve 1 contient une solution de monomère 11 à greffer sur le film 6, dont le volume est suffisant pour que les rouleaux intermédiaires 9 et 10 y soient complètement immergés.

Conformément à l'inventiôn, pour greffer un monomère sur un film polymère au moyen de l'installation de la figure 1, on soumet d'abord le film à des radiations ionisantes d'énergie suffisante pour y générer des radicaux libres. On enroule ensuite le film irradié 6 et le treillis 7 sur la bobine 2, on attache l'extrémité libre du film 6 à la bobine 3 et l'extrémité libre du treillis 7 au rouleau 4, on enroule le treillis 8 sur le rouleau 5 et on attache son extrémité libre à la bobine 3 et on verse un volume suffisant de solution de monomère 11 dans la cuve 1 pour que les deux rouleaux 9 et 10 y soient entièrement immergés. Le fonctionnement de l'installation de la figure 1 comporte plusieurs phases successives. Dans une première phase, on entraîne la bobine 3 dans le sens de la flèche 12, pour dérouler progressivement le film 6 de la bobine 2 et le treillis 8 du rouleau 5 et les enrouler ensemble sur la bobine 3. Simultanément, on entraîne le rouleau 4 dans le sens de la flèche 13 pour dérouler le treillis 7 de la bobine 2 et l'enrouler sur le rouleau 4. Les vitesses d'entraînement respectives de la bobine 3 et du rouleau 4 sont synchronisées de manière à éviter des tensions ou des plis dans le film 6 ou le treillis 7. Entre le rouleau 5 et la bobine 3, le treillis 8 passe sur le rouleau intermédiaire 10 et s'imprègne ainsi de la solution 11 qu'il véhicule jusqu'au contact du film 6 sur la bobine 3. Lorsque la bobine 2 a été entièrement déroulée, on passe à la seconde phase de fonctionnement de l'installation. Dans cette seconde phase, on inverse les sens de rotation des bobines 2 et 3 et des rouleaux 4 et 5. A cet effet, on entraîne la bobine 2 dans le sens de la flèche 14 et on entraîne le rouleau 5 dans le sens de la flèche 15. De la sorte, le film 6 est progressivement rembobiné sur la bobine 2, le treillis 8 est rembobiné sur son rouleau 5 et le treillis 7 est déroulé de son rouleau 4, passe sur le rouleau intermédiaire 9 et s'imprègne de la solution 11 qu'il véhicule ensuite jusqu'au contact du film 6 sur la bobine 2. La deuxième phase est poursuivie jusqu'à ce que le film 6 ait été entièrement déroulé de la bobine 3 et enroulé sur la bobine 2.

Les deux phases de fonctionnement qui viennent d'être décrites sont répétées autant de fois qu'il est nécessaire pour obtenir le taux de greffage voulu.

Dans l'installation de la figure 1, la face du film 6 qui est concave sur la bobine 2 est également concave sur la bobine 3.

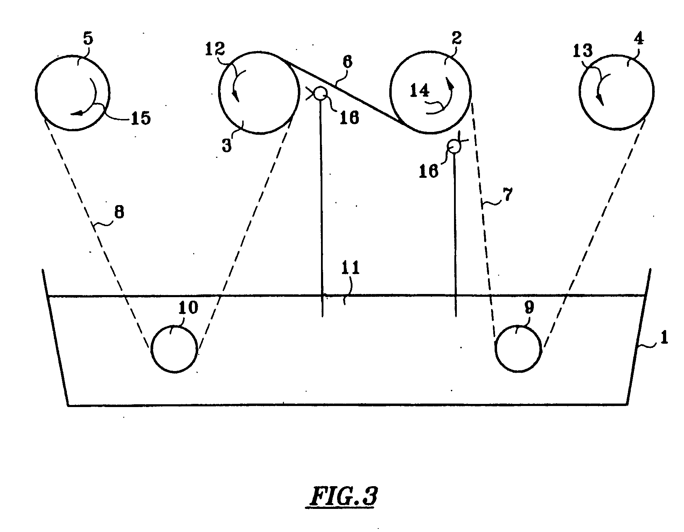

L'installation de la figure 3 diffère de celle de la figure 1 par le sens d'enroulement du film 6 et du treillis 7 sur la bobine 2. Les sens d'enroulement respectifs du film 6 sur les bobines 2 et 3 sont choisis de telle sorte que la face du film qui est concave sur la bobine 2, soit convexe sur la bobine 3. L'installation de la figure 3 présente ainsi l'avantage d'éviter un cintrage permanent du film greffé.

Dans une variante d'exécution des deux formes d'exécution des figures 1 à 3, le film 6 est soumis aux radiations ionisantes après qu'il ait été enroulé sur la bobine 2 avec le treillis 7.

Dans une autre variante d'exécution des figures 1 à 3, on projette la solution du monomère sur le film 6 et/ou les treillis 7 et 8 au moyen de gicleurs appropriés 16 qui se trouvent en communication avec le bain de solution 11. Dans cette variante de réalisation du procédé selon l'invention, la circulation des treillis 7 et 8 dans la bain de solution 11 devient facultative et les rouleaux intermédiaires 9 et 10 peuvent par conséquent être supprimés.

Dans le procédé selon l'invention, décrit en référence aux figures 1 à 3, la longueur des treillis 7 et 8 doit être supérieure à celle de la partie utile du film 6, pour tenir compte d'une dilatation du film pendant l'imprégnation avec la solution de monomère 11 (la partie utile du film étant celle que l'on souhaite effectivement traiter avec la solution).

Le procédé qui vient d'être décrit en référence aux figures 1 à 3 et ses variantes d'exécution trouvent une application intéressante pour la fabrication de membranes cationiques et de membranes anioniques destinées à la fabrication de solutions aqueuses d'hydroxyde de sodium par électrodialyse de solutions aqueuses de chlorure de sodium ou de carbonate de sodium. Dans cette application de l'invention, le film 6 est avantageusement un film en polymère ou copolymère fluoré, par exemple en polytétrafluoroéthylène ou en copolymère de l'éthylène et du tétrafluoroéthylène.

Pour fabriquer une membrane anionique, la solution de monomère 11 peut par exemple comprendre une solution de chlorométhylstyrène dans de l'éthanol. La feuille greffée obtenue à l'issue du procédé est ensuite traitée avec une solution aqueuse de triméthylamine pour fixer des groupes d'ammonium quaternaire sur les radicaux chlorométhyl du film.

Pour fabriquer une membrane cationique, la solution de monomère 11 peut comprendre, par exemple, une solution de styrène dans de l'éthanol. La feuille greffée obtenue à l'issue du procédé est ensuite soumise successivement à un traitement avec de l'acide chlorosulfonique et à une hydrolyse avec une solution aqueuse d'hydroxyde de sodium pour créer les sites cationiques actifs.

## Revendications

1. Procédé pour greffer un monomère sur un film en matière polymère, dans lequel on met le film en contact avec une solution liquide du monomère, **caractérisé en ce que** pour mettre le film en contact avec la solution du monomère, on loge la solution dans des alvéoles d'au moins une feuille alvéolaire que l'on applique contre au moins une face du film.

2. Procédé selon la revendication 1, **caractérisé en ce qu'**on fait circuler le film et/ou la feuille alvéolaire dans un bain de la solution et on les enroule ensuite sur une bobine.

3. Procédé selon la revendication 2 ou 3, **caractérisé en ce qu'**on déroule la feuille alvéolaire d'un rouleau, pendant qu'on l'enroule avec le film sur la bobine.

4. Procédé selon la revendication 2 ou 3, **caractérisé en ce qu'**on met en oeuvre deux bobines et deux feuilles alvéolaires et on enroule le film alternativement sur une des bobines avec une des feuilles alvéolaires et sur l'autre bobine avec l'autre feuille alvéolaire.

5. Procédé selon la revendication 4, **caractérisé en ce que** les deux feuilles alvéolaires sont disposées respectivement sur deux rouleaux où on les enroule et déroule alternativement.

6. Procédé selon l'une quelconque des revendications 1 à 5, **caractérisé en ce qu'**avant et/ou pendant que l'on applique la feuille alvéolaire sur le film, on soumet celui-ci à des radiations ionisantes.

7. Procédé selon l'une quelconque des revendications 1 à 6, **caractérisé en ce que** la feuille alvéolaire comprend un treillis.

8. Procédé selon l'une quelconque des revendications 1 à 7, **caractérisé en ce qu'**il est appliqué à la fabrication d'une membrane échangeuse d'ions.

9. Procédé selon la revendication 8, **caractérisé en ce que** la matière polymère du film est sélectionnée dans le groupe comprenant le polyéthylène, le polypropylène, le polychlorure de vinyle, le polyfluorure de vinylidène. le polytétrafluoroéthylène, les copolymères de l'éthylène et du tétrafluoroéthylène, les copolymères du propylène et du tétrafluoroéthylène, les copolymères du tétrafluoroéthylène et d'éther perfluorovinylique et les copolymères de l'hexafluoropropylène et du tétrafluoroéthylène, et **en ce que** le monomère est sélectionné parmi les composés comprenant un radical aryle, les composés aminés et les précurseurs des composés aminés.

10. Procédé selon la revendication 9, **caractérisé en ce que** le monomère est sélectionné parmi les alcénylbenzènes, les (polyalcényl)benzènes, les halogénoalkylstyrènes èt les composés hétérocycliques azotés comprenant un radical alcényle.

## Patentansprüche

1. Verfahren zum Pfropfen eines Monomers auf eine Kunststofffolie, worin die Folie mit einer flüssigen Lösung des Monomers in Kontakt gebracht wird, **dadurch gekennzeichnet, daß** zum Inkontaktbringen der Folie mit der Lösung des Monomers die Lösung in die Hohlräume wenigstens einer Zellfolie eingebracht wird, die gegen wenigstens eine Seite der Folie aufgetragen wird.

2. Verfahren nach Anspruch 1, **dadurch gekennzeichnet, daß** die Folie und/oder die Zellfolie in ein Bad der Lösung zirkulieren gelassen wird und daß sie anschließend auf einer Spule aufgewickelt werden.

3. Verfahren nach Anspruch 2 oder 3, **dadurch gekennzeichnet, daß** die Zellfolie von einer Rolle abgewickelt wird, während sie zusammen mit der Folie auf die Spule aufgewickelt wird.

4. Verfahren nach Anspruch 2 oder 3, **dadurch gekennzeichnet, daß** zwei Spulen und zwei Zellfolien angewendet werden und daß die Folie alternierend auf eine der Spulen mit einer der Zellfolien und auf die andere Spule mit der anderen Zellfolie aufgewickelt wird.

5. Verfahren nach Anspruch 4, **dadurch gekennzeichnet, daß** die beiden Zellfolien auf zwei Rollen angeordnet sind, auf denen sie alternierend auf- bzw. abgewickelt werden.

**6.** Verfahren nach einem der Ansprüche 1 bis 5, **dadurch gekennzeichnet, daß** vor und/oder während des Auftragens der Zellfolie auf die Folie die Zellfolie ionisierenden Strahlen ausgesetzt wird.

**7.** Verfahren nach einem der Ansprüche 1 bis 6, **dadurch gekennzeichnet, daß** die Zellfolie ein Netzwerk umfaßt.

**8.** Verfahren nach einem der Ansprüche 1 bis 7, **dadurch gekennzeichnet, daß** es auf die Herstellung einer Ionenaustauschmembran angewendet wird.

**9.** Verfahren nach Anspruch 8, **dadurch gekennzeichnet, daß** das Polymermaterial der Folie aus der Polyethylen, Polypropylen, Polyvinylchlorid, Polyvinylidenfluorid, Polytetrafluorethylen, Ethylen-Tetrafluorethylen-Copolymere, Propylen-Tetrafluorethylen-Copolymere, Tetrafluorethylen-Perfluorvinylether-Copolymere und Hexafluorpropylen-Tetrafluorethylen-Copolymere umfassenden Gruppe ausgewählt wird und daß das Monomer unter den einen Arylrest umfassenden Verbindungen, den Aminoverbindungen und den Vorläufern von Aminoverbindungen ausgewählt wird.

**10.** Verfahren nach Anspruch 9, **dadurch gekennzeichnet, daß** das Monomer unter Alkenylbenzolen, (Polyalkenyl)benzolen, Halogenalkylstyrolen und heterocyclischen stickstoffhältigen Verbindungen, die einen Alkenylrest umfassen, ausgewählt wird.

**Claims**

**1.** Process for grafting a monomer onto a polymer film, in which the film is placed in contact with a liquid solution of the monomer, **characterized in that**, in order to place the film in contact with the monomer solution, the solution is housed in alveoli of at least one alveolar sheet that is applied against at least one face of the film.

**2.** Process according to Claim 1, **characterized in that** the film and/or the alveolar sheet is (are) passed through a bath of the solution and is (are) then rolled up on a reel.

**3.** Process according to Claim 1 or 2, **characterized in that** the alveolar sheet is unwound from a roll at the same time that it is rolled up with the film on the reel.

**4.** Process according to Claim 2 or 3, **characterized in that** two reels and two alveolar sheets are used and the film is rolled up alternately on one of the reels with one of the alveolar sheets and on the other reel with the other alveolar sheet.

**5.** Process according to Claim 4, **characterized in that** the two alveolar sheets are arranged, respectively, on two rolls, where they are rolled up and unwound alternately.

**6.** Process according to any one of Claims 1 to 5, **characterized in that**, before and/or during the application of the alveolar sheet to the film, this film is subjected to ionizing radiation.

**7.** Process according to any one of Claims 1 to 6, **characterized in that** the alveolar sheet comprises a lattice.

**8.** Process according to any one of Claims 1 to 7, **characterized in that** it is applied to the manufacture of an ion-exchange membrane.

**9.** Process according to Claim 8, **characterized in that** the polymer of the film is selected from the group comprising polyethylene, polypropylene, polyvinyl chloride, polyvinylidene fluoride, polytetrafluoroethylene, copolymers of ethylene and of tetrafluoroethylene, copolymers of propylene and of tetrafluoroethylene, copolymers of tetrafluoroethylene and of perfluorovinyl ether, and copolymers of hexafluoropropylene and of tetrafluoroethylene, and **in that** the monomer is selected from compounds comprising an aryl radical, amine compounds and precursors of amine compounds.

**10.** Process according to Claim 9, **characterized in that** the monomer is selected from alkenylbenzenes, (polyalkenyl)benzenes, haloalkylstyrenes and nitrogenous heterocyclic compounds comprising an alkenyl radical.

*FIG.1*

*FIG.2*

_FIG.3_

EP 1 200 511 B1